# FASCICULE DE BREVET EUROPEEN

(11) **EP 4 455 537 B1**
(45) Date de publication et mention de la délivrance du brevet: **20.08.2025**
(21) Numéro de dépôt: 24166726.0
(22) Date de dépôt: 27.03.2024
(51) Int. Cl.: F17C 7/02

(54) **DISPOSITIF DE FOURNITURE DE FLUIDE CRYOGÉNIQUE ET INSTALLATION DE REMPLISSAGE DE RÉSERVOIRS**
VORRICHTUNG ZUR BEREITSTELLUNG EINER KRYOGENEN FLÜSSIGKEIT UND TANKFÜLLANLAGE
DEVICE FOR SUPPLYING CRYOGENIC FLUID AND TANK FILLING FACILITY

(30) Priorité: 25.04.2023 FR 2304147
(43) Date de publication de la demande: 30.10.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: PENNEC, Yann, 38360 SASSENAGE (FR); BENISTAND-HECTOR, Cyril, 38360 SASSENAGE (FR); BRUNET MANQUAT, Loïc, 38360 SASSENAGE (FR); OUAKRIM, Wassim, 38360 SASSENAGE (FR)
(74) Mandataire: Air Liquide

(56) Documents cités:
- US-A- 4 472 946
- US-A1- 2021 404 604
- US-B1- 6 354 088
- US-B2- 7 069 730

## Description

L'invention concerne un dispositif de fourniture de fluide cryogénique et une installation de remplissage de réservoirs.

US7069730B2 divulgue un tel dispositif.

L'invention concerne plus particulièrement un dispositif de fourniture de fluide cryogénique sous pression comprenant un récipient isolé thermiquement et composé d'un réservoir interne délimitant un volume configuré pour le stockage de liquide cryogénique à pomper, par exemple de l'hydrogène liquide, et un réservoir externe disposé autour du réservoir interne en délimitant un volume étanche autour du réservoir interne, en configuration d'utilisation du dispositif, les réservoirs interne et externe s'étendant verticalement et étant refermés à leur extrémité supérieure par un ensemble de couvercle(s), le dispositif comprenant un système de pompage monté sur l'ensemble de couvercle(s) et comprenant une extrémité inférieure logée dans le volume délimité par le réservoir interne et configurée pour y pomper le liquide cryogénique, le dispositif comprenant en outre une circuiterie d'amenée de liquide cryogénique configurée pour alimenter le réservoir interne avec du fluide cryogénique et une circuiterie de refoulement configurée pour transférer le liquide cryogénique pompé par le système de pompage hors du réservoir interne.

Des projets de ravitaillement de véhicules avec ce l'hydrogène liquide sous pression posent des défis pour réaliser les performances attendues en terme de température, pression et débit.

Les solutions actuellement connues consistent à pomper de l'hydrogène liquide dans des applications de ravitaillement industrielles (transfert de liquide) ou à pomper de l'hydrogène liquide qui est ensuite vaporisé à très haute pression.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le système de pompage comprend au moins une pompe à piston actionnée par un actionneur, de préférence linéaire. Par ailleurs, des modes de réalisation de l'invention peuvent comporter l'une ou plusieurs des caractéristiques suivantes :
- le système de pompage comprend deux pompes à piston raccordées en parallèle à la circuiterie de refoulement et configurées pour être actionnées de façon décalées pour assurer un flux continu de liquide cryogénique pompé dans la circuiterie de refoulement,
- l'ensemble de couvercle(s) comprend un premier couvercle et un deuxième couvercle, le deuxième couvercle obturant une ouverture dans le premier couvercle, le deuxième couvercle formant un support pour le système de pompage et étant monté de façon étanche et démontable sur le deuxième couvercle, le système de pompage étant configuré pour être monté ou démonté verticalement par rapport au récipient avec le montage ou le démontage du deuxième couvercle,
- la circuiterie de refoulement comprend une conduite de refoulement ayant une extrémité inférieure reliée à l'extrémité inférieure du système de pompage et une extrémité supérieure raccordée à l'ensemble de couvercle(s), en configuration d'utilisation du dispositif, une partie de la conduite de refoulement étant immergée dans le liquide cryogénique à pomper,
- l'extrémité supérieure de la conduite de refoulement est raccordée au deuxième couvercle et débouche sur ce dernier,
- la circuiterie d'amenée de liquide cryogénique comprend un ensemble de vanne(s) et transite dans le volume étanche délimité autour du réservoir interne par le réservoir externe,
- l'ensemble de couvercle(s) comprend au moins un passage de sortie de dégazage relié à un ensemble de conduite(s) de dégazage transitant dans le volume étanche délimité autour du réservoir interne par le réservoir externe,
- l'ensemble de conduite(s) de dégazage comprend une première conduite de dégazage ayant une première extrémité reliée à une extrémité supérieure du réservoir interne et une seconde extrémité débouchant au niveau d'un raccord à l'extérieur du récipient,
- la première conduite de dégazage comprend une vanne,
- l'ensemble de conduite(s) de dégazage comprend au moins une seconde conduite de dégazage ayant une première extrémité reliée à la première conduite de dégazage et une seconde extrémité débouchant au niveau d'un raccord ou passage à l'extérieur du récipient,
- le dispositif comporte au moins une seconde conduite de dégazage munie d'une vanne et/ou raccordée à une soupape de sécurité sensible à la pression et située en dehors du récipient,
- le système de pompage comprend une tige de piston qui s'étend verticalement dans le réservoir interne, le dispositif comprenant une structure de support et de guidage du système de pompage monté autour de la tige de piston à l'intérieur du réservoir interne, le dispositif comprenant en outre une structure d'isolation thermique interposée autour de la structure de support et de guidage,
- la structure d'isolation thermique est montée solidaire du second couvercle entre le second couvercle et une extrémité inférieure de la structure de support et de guidage,
- la structure d'isolation thermique comprend un empilement vertical d'un ensemble de couche(s) de mousse d'isolation et/ d'un ensemble d'écran(s) thermique(s),
- le dispositif comprend une circuiterie de purge comprenant au moins une conduite ayant une première extrémité débouchant au niveau d'un raccord ou passage à l'extérieur du récipient et une seconde extrémité raccordée à la circuiterie d'amenée,
- le réservoir interne possède un système de contrôle et de régulation du niveau de liquide comprenant au moins l'un parmi : un capteur de pression mesurant la pression dans le réservoir interne, un capteur de température mesurant la température dans le réservoir interne, un capteur de niveau de liquide mesurant le niveau de liquide dans le réservoir interne,
- l'ensemble des vannes et organes de mesure et de traitement du flux de fluide pompé est logé dans le volume étanche délimité autour du réservoir interne par le réservoir externe.

L'invention concerne également une installation de remplissage de réservoirs de fluide cryogénique sous pression, en particulier d'hydrogène liquéfié, comprenant au moins un dispositif de fourniture de fluide conforme à l'une quelconque des caractéristiques ci-dessus ou ci-dessous, dans laquelle la circuiterie d'amenée de liquide cryogénique est configurée pour être raccordée à au moins une source de fluide cryogénique liquéfié, l'installation comprenant au moins un distributeur fluide cryogénique sous pression muni d'une conduite de transfert ayant une extrémité configurée pour être raccordée à un réservoir à remplir, l'installation comprenant une circuiterie de distribution reliant la circuiterie de refoulement d'au moins un dispositif de fourniture de fluide à au moins un distributeur fluide.

Selon d'autres particularités possibles :
- l'installation comprend plusieurs dispositifs de fourniture de fluide raccordés en parallèle à un ou plusieurs distributeurs de fluide via la circuiterie de distribution, la circuiterie de distribution comprenant une conduite de distribution commune et un ensemble de vanne(s) de distribution configuré pour permettre le transfert de fluide sélectivement d'un ou plusieurs dispositif(s) de fourniture de fluide vers le ou les distributeurs fluide,
- l'installation comprend au moins une source de liquide cryogénique raccordée à la circuiterie d'amenée de liquide cryogénique du au moins un dispositif de fourniture de fluide,
- le distributeur fluide comprend un circuit de récupération de gaz sous pression raccordé à la conduite de transfert et un organe de récupération de gaz, par exemple la source de liquide cryogénique,
- le distributeur fluide comprend un circuit de récupération de gaz ayant une extrémité raccordée à la conduite de transfert et une extrémité raccordée à un organe de récupération de gaz, par exemple la source de liquide cryogénique et/ou raccordée à la cheminée,
- l'installation comprend une réserve de gaz de balayage, par exemple de l'azote, et un réseau de purge reliant la réserve de gaz de balayage à la conduite de transfert du distributeur fluide et au(x) dispositif(s) de fourniture.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :

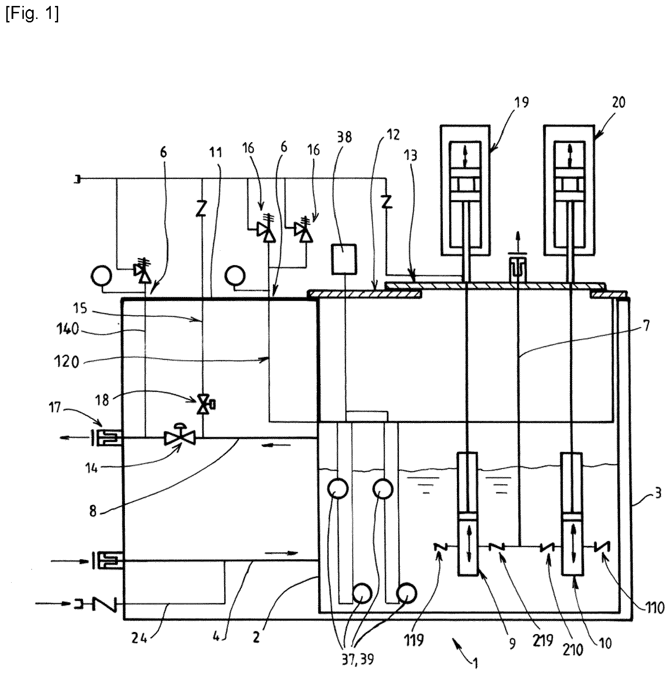

[Fig. 1] est une vue en coupe verticale, schématique et partielle, illustrant un exemple de dispositif de fourniture de fluide cryogénique selon un exemple de réalisation de l'invention,
[Fig. 2] est une vue en coupe verticale, schématique et partielle, illustrant un détail d'un système de pompage du dispositif de fourniture de fluide cryogénique selon un exemple possible de réalisation de l'invention;
[Fig. 3] est une vue schématique et partielle illustrant un exemple d'installation de remplissage de réservoirs utilisant un tel dispositif de fourniture de fluide cryogénique,
[Fig. 4] est une vue schématique et partielle illustrant un exemple de distributeur de fluide d'une telle d'installation de remplissage.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Le dispositif 1 de fourniture de fluide cryogénique sous pression comprend un récipient isolé thermiquement et composé d'un réservoir 2 cryogénique interne délimitant un volume configuré pour le stockage de liquide cryogénique à pomper, par exemple de l'hydrogène liquide. Le récipient comprend en outre un réservoir 3 externe disposé autour du réservoir interne 2 en délimitant un volume étanche autour du réservoir 2 interne (de préférence un volume sous vide). Par exemple le réservoir interne 2 est logé dans le volume du réservoir 3 externe.

En configuration d'utilisation du dispositif 1, les réservoirs interne 2 et externe 3 s'étendent verticalement depuis des fonds inférieurs respectifs et sont refermés à leur extrémité supérieure par un ensemble de couvercle(s) 11, 12, 13 commun(s).

Par exemple, un couvercle 11 principal referme le réservoir externe 3 (par exemple par soudage). Ce couvercle 11 principal possède une ouverture pour le passage du réservoir interne 2 et cette ouverture est refermée de façon étanche par un autre couvercle 12 intermédiaire qui referme le réservoir 2 interne. Par exemple, le couvercle 12 intermédiaire est fixé par soudage sur le couvercle 11 principal. Enfin, le dispositif 1 peut comporter un troisième couvercle 13 support monté sur le couvercle 12 intermédiaire pour refermer de façon étanche un passage au sein du couvercle 12 intermédiaire. Ce couvercle 13 support peut être monté étanche de façon démontable (amovible) sur le couvercle 12 intermédiaire et peut servir de support pour un système de pompage du dispositif 1 et décrit plus en détail ci-dessous.

Le système de pompage 9, 10 monté sur l'ensemble de couvercle(s) possède une extrémité inférieure logée dans le volume délimité par le réservoir interne 2 et configurée pour y pomper le liquide cryogénique et une extrémité supérieure située au-dessus de l'ensemble de couvercle (à l'extérieur du récipient) comprenant le système d'actionnement chaud (moteur(s)).

Le dispositif 1 comprend une circuiterie 4 d'amenée de liquide cryogénique configurée pour alimenter le réservoir 2 interne avec du fluide cryogénique (fourni par une source). Le dispositif 1 comprend en outre une circuiterie 7 de refoulement configurée pour transférer le liquide cryogénique pompé par le système de pompage 9, 10 hors du réservoir 2 interne.

Le système de pompage comprend au moins une pompe 9, 10 à piston actionnée par un actionneur 19 de préférence linéaire. Comme illustré, le système de pompage comprend de préférence deux pompes à piston raccordées en parallèle à la circuiterie 7 de refoulement et configurées pour être actionnées de façon décalées pour assurer un flux continu de liquide cryogénique pompé dans la circuiterie 7 de refoulement. C'est-à-dire que les deux pompes 9, 10 alternatives sont employées en parallèle et forme un unique étage de compression délivrant un flux à pression constante et en continu. Ceci permet de fournir des profils de débit massique contrôlés.

Chaque piston peut être entraîné par un par moteur 19, 20 linéaire respectif. Ceci permet un contrôle précis de la position et du cap du piston. Ceci permet par exemple une course moyenne de 5 cm à 50 cm, une fréquence modérée de l'ordre de 0,1 à 5 Hz et des forces modérées de 2 à 20 kN. L'entraînement par moteur linéaire permet un cycle non sinusoïdal tel qu'un profil carré pour un débit massique constant ou un fonctionnement à petite vitesse pendant la phase d'admission et à grande vitesse pendant la phase de compression.

L'arrangement comporte deux têtes distinctes fonctionnant à une phase de 180 degrés d'écart.

Chaque pompe à piston comprend par exemple un piston monté à l'extrémité d'un axe et qui coulisse selon un mouvement alternatif dans un cylindre pour réaliser des phases de compression et d'admission dans une chambre de compression. De préférence, chaque piston est mobile en translation dans un cylindre à corps unique. Ceci limite les coûts de pièces et d'assemblage. La tête de piston est de préférence vissée sur la tige pour être facilement remplacée.

Chaque extrémité inférieure de pompage peut comporter un clapet d'admission 119, 110 respectif et un clapet de refoulement respectif 219, 210.

Les clapets d'admission 119, 110 et de refoulement 219, 210 peuvent être disposés relativement pour optimiser la perte de charge à l'injection dans la chambre de compression pour limiter la génération de gaz de vaporisation (flash) à l'injection et ainsi optimiser le rendement volumétrique de la pompe. Par exemple, chaque pompe comprend un ensemble de fente(s) située(s) au niveau de l'axe et/ou du piston configuré pour assurer une évacuation de gaz lors des déplacements du piston.

La circuiterie 7 de refoulement comprend une conduite de refoulement ayant une extrémité inférieure reliée à l'extrémité inférieure du système de pompage 9, 10 et une extrémité supérieure raccordée au couvercles 13 support. Par exemple, les clapets de refoulement 219, 210 sont reliés en parallèle à une extrémité inférieure de la conduite de refoulement.

La conduite de refoulement s'étend de bas en haut et en configuration d'utilisation du dispositif 1, une partie de cette conduite de refoulement est immergée dans le liquide cryogénique à pomper. Cette configuration assure un échange de chaleur avec la réserve de liquide froid à pomper maintien en froid le fluide pompé avant sa sortie du récipient. Ceci assure la conservation de la température d'échappement dans des conditions cryogéniques.

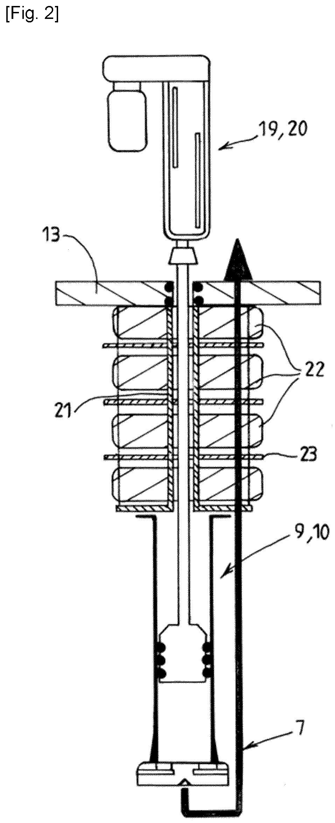

Comme illustré à la [Fig. 2], chaque pompe 9, 10 peut comprendre une tige 42 de piston qui s'étend verticalement dans le réservoir 2 interne et une structure 21 de support et de guidage de l'ensemble tige 42 et piston 43. Cette structure 21 de support et de guidage est monté autour de la tige 42 de piston à l'intérieur du réservoir 2 interne. La structure 21 de support et de guidage comprend par exemple un guide tubulaire muni d'épaulements à ses extrémités.

De plus, le dispositif 1 comprend de préférence une structure 22, 23 d'isolation thermique interposée autour de la structure 21 de support et de guidage.

Cette structure 22, 23 d'isolation thermique est par exemple montée solidaire du couvercle 13 support entre ce couvercle 13 et une extrémité inférieure de la structure 21 de support et de guidage. La structure d'isolation thermique comprend par exemple un empilement vertical d'un ensemble de couche(s) 22 de mousse d'isolation thermique et/ou d'un ensemble d'écran(s) thermique(s) 23 thermalisé(s) (refroidies par exemple par du fluide cryogénique du réservoir 2 interne). En variante ou en combinaison, la structure d'isolation thermique peut comporter un espace de séparation sous vide supplémentaire.

Ainsi, le système de pompage peut être simplement soulevé verticalement avec son couvercle 13 support pour l'entretien, donnant un accès direct et rapide aux pièces réparables. En particulier, au moins l'un parmi : les clapets de refoulement 219, 210, les clapets d'admission 119, 110, la conduite de refoulement, la structure 21 de support et de guidage, la structure 22, 23 d'isolation thermique peut être solidaire du couvercle 13 support. Le soulèvement de ce dernier donne un accès direct aux pièces réparables de la partie de pompage.

Le volume de liquide où baigne les extrémités de pompage est isolé sous vide par le volume du réservoir 3 externe et qui est utilisé pour l'intégration de la circuiterie (vannes et de l'accouplement fluidique notamment). Ainsi, la circuiterie 4 d'amenée de liquide cryogénique peut comprendre un ensemble de vanne(s) 14 et peut transite dans le volume étanche délimité autour du réservoir 2 interne par le réservoir 3 externe.

L'ensemble de couvercle(s) comprend au moins un passage 6 de sortie de dégazage relié à un ensemble de conduite(s) 8, 120, 140, 15 de dégazage transitant dans le volume étanche délimité autour du réservoir 2 interne par le réservoir 3 externe. Par exemple, une première conduite 8 de dégazage peut s'étendre entre une première extrémité reliée à une extrémité supérieure du réservoir 2 interne et une seconde extrémité débouchant au niveau d'un raccord 17 à l'extérieur du récipient. La première conduite 8 de dégazage comprend par exemple une vanne 14 de dégazage. Comme illustré, l'ensemble de conduites de dégazage peut comprendre au moins une seconde conduite 120, 140, 15 de dégazage ayant une première extrémité reliée à la première conduite 8 de dégazage et une seconde extrémité débouchant au niveau d'un raccord ou passage à l'extérieur du récipient. De préférence, moins une conduite 15 de dégazage est munie d'une vanne 18 et/ou raccordée à une soupape 16 de sécurité sensible à la pression et située en dehors du récipient (le gaz évacué transitant à travers un couvercle 11). De préférence, une soupape 16 de surpression de sécurité redondante est prévue pour le réservoir 2 interne. De plus, de préférence est prévu également une soupape de protection contre la dilatation thermique pour chaque nœud de circuiterie.

Dans un mode de réalisation avantageux illustré, la circuiterie 4 d'amenée de liquide cryogénique est dépourvue de vanne dans le réservoir 3 externe mais peut comporter uniquement un clapet 40 auto-obturant au niveau d'un raccord débouchant sur la paroi extérieure du réservoir 3 externe.

Comme illustré, le dispositif 1 comprend de préférence une circuiterie 24 de purge comprenant au moins une conduite ayant une première extrémité débouchant au niveau d'un raccord ou passage à l'extérieur du récipient et une seconde extrémité raccordée à la circuiterie 4 d'amenée Cette structure simplifiée peut utiliser ainsi seulement deux vannes 14, 18, une vanne 14 sur la conduite 8 de dégazage pour contrôler le niveau de pression dans le réservoir 2 interne et une vanne 18 sur une autre conduite 15 de dégazage pour la décharge forcée à l'évent 16 et/ou pour une procédure d'inertage et de conditionnement de la circuiterie.

Ainsi, le volume du réservoir 3 externe forme une boîte à vannes.

Comme illustré, le réservoir 2 interne possède de préférence un système 38 de contrôle et de régulation du niveau de liquide dans le réservoir 2 interne. Ce système 38 de contrôle et de régulation peut comprendre par exemple au moins l'un parmi : un capteur de pression mesurant la pression dans le réservoir 2 interne, un capteur 37 de température mesurant la température dans le réservoir 2 interne, un capteur 39 de niveau de liquide mesurant le niveau de liquide dans le réservoir 2 interne. Les mesure du ou des capteurs peuvent être traitées par un organe 38 électronique comprenant un microprocesseur en vue par exemple d'un remplissage automatisé du réservoir 2 interne.

Un ou plusieurs dispositifs 1 de fourniture de fluide cryogénique sous pression peuvent être utilisés dans des stations de remplissage de réservoirs.

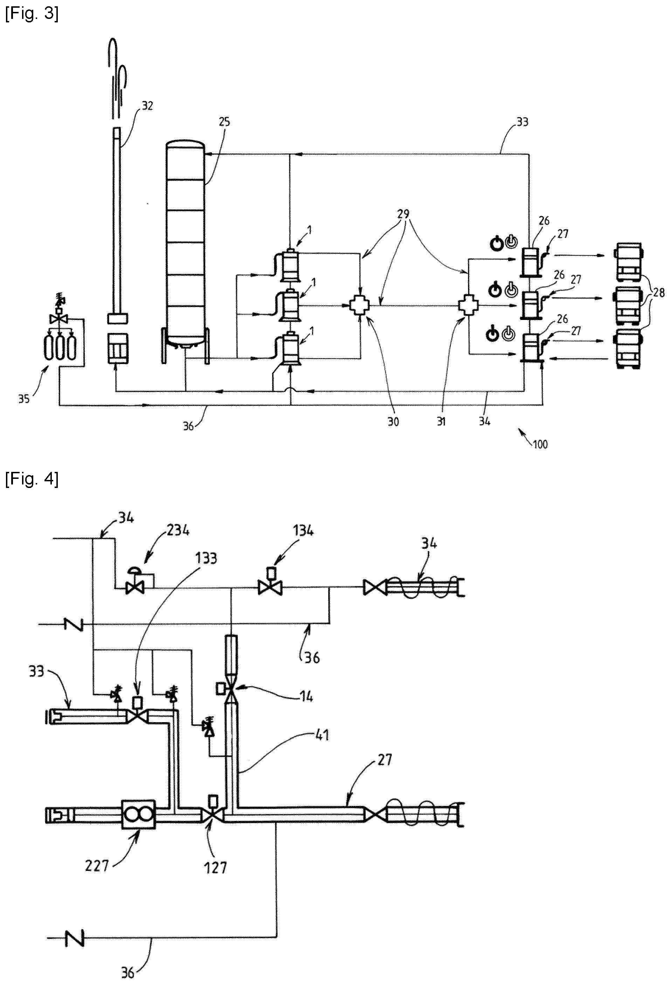

La [Fig. 3] illustre une installation 100 de remplissage de réservoirs de fluide cryogénique sous pression, en particulier d'hydrogène liquéfié, comprenant trois dispositifs 1 de fourniture de fluide.

La circuiterie 4 des dispositifs 1 de fourniture de fluide est raccordée à au moins une source 25 de fluide cryogénique liquéfié (ici un stockage de liquide cryogénique). Une source constituée d'un réservoir statique permet de récupérer une quantité importante du gaz d'ébullition généré par le système de pompage ou tout autre partie de l'installation 100. Bien entendu, en variante cette source 2 pourrait être comprendre ou être constitué également d'un réservoir mobile de livraison.

L'installation 100 comprend trois distributeurs 26 fluide cryogénique sous pression munis chacun d'une conduite 27 de transfert ayant une extrémité configurée pour être raccordée à un réservoir 28 à remplir (raccord rapide). L'installation 100 comprend une circuiterie 29 de distribution reliant la circuiterie 7 de refoulement des dispositif 1 de fourniture de fluide aux distributeurs 26.

Dans cet exemple, les dispositif 1 de fourniture de fluide sont raccordés en parallèle aux distributeurs 26 fluide via la circuiterie 29 cryogénique de distribution. Cette circuiterie 29 de distribution peut comprendre une conduite de distribution unique commune et un ensemble de vanne(s) 30, 31 de distribution configuré pour permettre le transfert de fluide sélectivement d'un ou plusieurs dispositif 1 de fourniture de fluide vers le ou les distributeurs 27 fluide. L'ensemble de vannes 30, 31 de distribution peut comporter une ou des vannes trois voies et/ou plusieurs vannes à deux voies agencées pour permettre de répartir le fluide l'un quelconque des dispositifs de fourniture vers l'un quelconque des distributeurs 26.

L'installation 100 peut comporter une cheminée 32 d'évacuation de gaz raccordée à l'ensemble de conduite(s) 8, 120, 140, 15 de dégazage des dispositifs 1 de fourniture de fluide.

Chaque distributeur 26 comprend conduite 27 de transfert de liquide dont l'extrémité aval peut comporter un flexible muni d'un raccord rapide configuré pour se raccorder à un réservoir à remplir. Un bras de support du flexible peut être prévu pour abaisser la masse ressentie et les forces de translation pour les conduites cryogéniques flexibles et une tuyère de liaison le cas échéant. Un réchauffeur peut être monté à la base du système de tuyau du distributeur 26 pour dégivrer et enlever la poussière de la buse avant/après utilisation.

Comme illustré, la conduite 27 de transfert peut comporter une vanne 127 d'isolation et éventuellement un débitmètre 227.

De même, chaque distributeur 26 fluide peut comporter un circuit 33 de récupération de gaz sous pression raccordé à la conduite 27 de transfert et un organe de récupération de gaz, par exemple vers la source 25 de liquide cryogénique.

Le distributeur 26 peut comporter une première conduite 34 de récupération de gaz ayant une extrémité amont située au niveau d'un flexible et destinée à être reliée au réservoir à remplir (pour le dépressuriser). Une seconde extrémité aval de cette première conduite 34 de récupération de gaz est prévue par exemple pour être reliée à la source ou tout autre système de collecte de gaz (gaz de vaporisation). Entre ces extrémités amont et aval, la conduite 34 de récupération de gaz peut comporter une vanne 134 et/ou un détendeur 234.

Une seconde conduite 33 de récupération de gaz unie d'une vanne 133 peut être raccordée à la conduite 27 de transfert.

Une conduite transversale 41 (munie d'une vanne 141) peut être prévue pour relier la conduite 27 de transfert et la première conduite 34 de récupération de gaz.

Une ou des conduites de purge peuvent être raccordée(s) à la conduite 34 de récupération de gaz et/ou la conduite 27 de transfert pour amener et récupérer un flux de gaz purge lors d'une opération de purge/balayage des circuiteries. Ce gaz de balayage, par exemple de l'azote, peut être fourni par une réserve 35 de gaz de balayage de l'installation 100. Ce gaz de purge peut alimenter également de préférence les circuiteries des dispositifs 1 de transfert de fluide via un réseau 36 de purge.

Ce système de conditionnement et d'inertage permet d'envoyer du gaz (N2, H2, He) et la quantité appropriée à des endroits déterminés des circuiteries.

L'agencement en parallèle des dispositifs 1 de distribution et des distributeurs 26 permet en particulier leur entretien séparément pour la maintenance sans arrêter l'installation 100 dans son ensemble.

Tout ou partie des vannes et/ou organes peuvent être commandés par un organe de contrôle électronique comprenant un microprocesseur et qui communiquer avec l'installation 100.

## Revendications

1. Dispositif de fourniture de fluide cryogénique sous pression comprenant un récipient isolé thermiquement et composé d'un réservoir (2) interne délimitant un volume configuré pour le stockage de liquide cryogénique à pomper, par exemple de l'hydrogène liquide, et un réservoir (3) externe disposé autour du réservoir interne (2) en délimitant un volume étanche autour du réservoir (2) interne, en configuration d'utilisation du dispositif (1), les réservoirs interne (2) et externe (3) s'étendant verticalement et étant refermés à leur extrémité supérieure par un ensemble de couvercle(s) (11, 12, 13), le dispositif (1) comprenant un système de pompage (9, 10) monté sur l'ensemble de couvercle(s) (11, 12, 13) et comprenant une extrémité inférieure logée dans le volume délimité par le réservoir interne (2) et configurée pour y pomper le liquide cryogénique, le dispositif (1) comprenant en outre une circuiterie (4) d'amenée de liquide cryogénique configurée pour alimenter le réservoir (2) interne avec du fluide cryogénique et une circuiterie (7) de refoulement configurée pour transférer le liquide cryogénique pompé par le système de pompage (9, 10) hors du réservoir (2) interne, caractérisé le système de pompage comprend deux pompes (9, 10) à piston actionnées par un actionneur (19), de préférence linéaire, les deux pompes à piston étant raccordées en parallèle à la circuiterie (7) de refoulement et configurées pour être actionnées de façon décalées pour assurer un flux continu de liquide cryogénique pompé dans la circuiterie (7) de refoulement, c'est-à-dire que les deux pompes (9, 10) alternatives sont employées en parallèle et forme un unique étage de compression délivrant un flux à pression constante et en continu.

2. Dispositif selon la revendication 1, **caractérisé en ce que** l'ensemble de couvercle(s) (11, 12, 13) comprend un premier couvercle (12) et un deuxième couvercle (13), le deuxième couvercle (13) obturant une ouverture dans le premier couvercle (12), le deuxième couvercle (13) formant un support pour le système de pompage (9, 10) et étant monté de façon étanche et démontable sur le deuxième couvercle (13), le système de pompage étant configuré pour être monté ou démonté verticalement par rapport au récipient avec le montage ou le démontage du deuxième couvercle (13).

3. Dispositif selon l'une quelconque des revendications 1 à 2, **caractérisé en ce que** la circuiterie (7) de refoulement comprend une conduite de refoulement ayant une extrémité inférieure reliée à l'extrémité inférieure du système de pompage (9, 10) et une extrémité supérieure raccordée à l'ensemble de couvercle(s) (12, 13), en configuration d'utilisation du dispositif (1), une partie de la conduite de refoulement étant immergée dans le liquide cryogénique à pomper.

4. Dispositif selon les revendications 2 et 3, prises en combinaison **caractérisé en ce que** l'extrémité supérieure de la conduite (7) de refoulement est raccordée au deuxième couvercle (13) et débouche sur ce dernier.

5. Dispositif selon l'une quelconque des revendications 1 à 4, **caractérisé en ce que** la circuiterie (4) d'amenée de liquide cryogénique comprend un ensemble de vanne(s) et transite dans le volume étanche délimité autour du réservoir (2) interne par le réservoir (3) externe.

6. Dispositif selon l'une quelconque des revendications 1 à 5, **caractérisé en ce que** l'ensemble de couvercle(s) (11, 12, 13) comprend au moins un passage (6) de sortie de dégazage relié à un ensemble de conduite(s) (8, 120, 140, 15) de dégazage transitant dans le volume étanche délimité autour du réservoir (2) interne par le réservoir (3) externe.

7. Dispositif selon la revendication 6, **caractérisé en ce que** l'ensemble de conduite(s) (8, 120, 140, 15) de dégazage comprend une première conduite (8) de dégazage ayant une première extrémité reliée à une extrémité supérieure du réservoir (2) interne et une seconde extrémité débouchant au niveau d'un raccord (17) à l'extérieur du récipient.

8. Dispositif selon la revendication 6, **caractérisé en ce que** la première conduite (8) de dégazage comprend une vanne (14).

9. Dispositif selon la revendication 6 ou 7, **caractérisé en ce que** l'ensemble de conduite(s) (8, 120, 140, 15) de dégazage comprend au moins une seconde conduite (120, 140) de dégazage ayant une première extrémité reliée à la première conduite (8) de dégazage et une seconde extrémité débouchant au niveau d'un raccord ou passage à l'extérieur du récipient.

10. Dispositif selon la revendication 9, **caractérisé en ce qu'**il comporte au moins une seconde conduite (15) de dégazage munie d'une vanne (18) et/ou raccordée à une soupape (16) de sécurité sensible à la pression et située en dehors du récipient.

11. Dispositif selon l'une quelconque des revendications 1 à 10, **caractérisé en ce que** le système de pompage (9, 10) comprend une tige de piston qui s'étend verticalement dans le réservoir (2) interne, le dispositif (1) comprenant une structure (21) de support et de guidage du système de pompage (9, 10) monté autour de la tige de piston à l'intérieur du réservoir (2) interne, le dispositif (1) comprenant en outre une structure (22, 23) d'isolation thermique interposée autour de la structure (21) de support et de guidage.

12. Dispositif selon la revendication 11 combinée à la revendication 3 ou 5, **caractérisé en ce que** la structure (22, 23) d'isolation thermique est montée solidaire du second couvercle (13) entre le second couvercle (13) et une extrémité inférieure de la structure (21) de support et de guidage.

13. Dispositif selon la revendication 11 ou 12, **caractérisé en ce que** la structure (22, 23) d'isolation thermique comprend un empilement vertical d'un ensemble de couche(s) de mousse d'isolation et/ d'un ensemble d'écran(s) thermique(s).

14. Dispositif selon l'une quelconque des revendications 1 à 13, **caractérisé en ce qu'**il comprend une circuiterie (24) de purge comprenant au moins une conduite ayant une première extrémité débouchant au niveau d'un raccord ou passage à l'extérieur du récipient et une seconde extrémité raccordée à la circuiterie (4) d'amenée.

15. Installation de remplissage de réservoirs de fluide cryogénique sous pression, en particulier d'hydrogène liquéfié, comprenant au moins un dispositif (1) de fourniture de fluide conforme à l'une quelconque des revendications 1 à 14, dans laquelle la circuiterie (4) d'amenée de liquide cryogénique est configurée pour être raccordée à au moins une source (25) de fluide cryogénique liquéfié, l'installation (100) comprenant au moins un distributeur (26) fluide cryogénique sous pression muni d'une conduite (27) de transfert ayant une extrémité configurée pour être raccordée à un réservoir (28) à remplir, l'installation (100) comprenant une circuiterie (29) de distribution reliant la circuiterie (7) de refoulement d'au moins un dispositif (1) de fourniture de fluide à au moins un distributeur (26) fluide.

16. Installation selon la revendication 15 **caractérisée en ce qu'**elle comprend plusieurs dispositifs (1) de fourniture de fluide raccordés en parallèle à un ou plusieurs distributeurs (26) fluide via la circuiterie (29) de distribution, la circuiterie (29) de distribution comprenant une conduite de distribution commune et un ensemble de vanne(s) (30, 31) de distribution configuré pour permettre le transfert de fluide sélectivement d'un ou plusieurs dispositif (1) de fourniture de fluide vers le ou les distributeurs (26) fluide.

17. Installation selon l'une quelconque des revendications 15 ou 16 **caractérisée en ce qu'**elle comprend au moins une source (25) de liquide cryogénique raccordée à la circuiterie (4) d'amenée de liquide cryogénique du au moins un dispositif (1) de fourniture de fluide.

18. Installation selon l'une quelconque des revendications 15 à 17 comprenant au moins un dispositif (1) de fourniture de fluide conforme à la revendication 7 ou 8, **caractérisée en ce qu'**elle comprend une cheminée (32) d'évacuation de gaz raccordée à l'ensemble de conduite(s) (8, 120, 140, 15) de dégazage du dispositif (1) de fourniture de fluide.

19. Installation selon les revendications 17 et 18 **caractérisée en ce que** le distributeur (26) fluide comprend un circuit (33) de récupération de gaz sous pression raccordé à la conduite (27) de transfert et un organe de récupération de gaz, par exemple la source (25) de liquide cryogénique.

20. Installation selon les revendication 18 et 19, **caractérisée en ce que** le distributeur (26) fluide comprend un circuit (33, 34) de récupération de gaz ayant une extrémité raccordée à la conduite (27) de transfert et une extrémité raccordée à un organe de récupération de gaz, par exemple la source (25) de liquide cryogénique et/ou raccordée à la cheminée (32).

21. Installation selon l'une quelconque des revendications 15 à 20, **caractérisée en ce qu'**elle comprend une réserve (35) de gaz de balayage, par exemple de l'azote, et un réseau (36) de purge reliant la réserve (35) de gaz de balayage à la conduite (27) de transfert du distributeur (26) fluide et au(x) dispositif(s) (1) de fourniture.

## Patentansprüche

1. Vorrichtung zur Bereitstellung von kryogenem Druckfluid, beinhaltend einen thermisch isolierten Behälter, der aus einem internen Tank (2), der ein Volumen begrenzt, das zur Speicherung von zu pumpender kryogener Flüssigkeit, beispielsweise Flüssigwasserstoff, konfiguriert ist, und einem externen Tank (3), der um den internen Tank (2) herum angeordnet ist und dabei ein abgedichtetes Volumen um den internen Tank (2) herum begrenzt, besteht, wobei sich der interne (2) und der externe (3) Tank in einer Verwendungskonfiguration der Vorrichtung (1) vertikal erstrecken und an ihrem oberen Ende durch einen Satz Deckel (11, 12, 13) verschlossen sind, wobei die Vorrichtung (1) ein Pumpsystem (9, 10) beinhaltet, das auf dem Satz Deckel (11, 12, 13) montiert ist und ein unteres Ende beinhaltet, das in dem durch den internen Tank (2) begrenzten Volumen aufgenommen ist und dazu konfiguriert ist, die kryogene Flüssigkeit darin zu pumpen, wobei die Vorrichtung (1) ferner einen Kreislauf (4) zum Zuführen kryogener Flüssigkeit, der dazu konfiguriert ist, den internen Tank (2) mit kryogenem Fluid zu versorgen, und einen Druckkreislauf (7), der dazu konfiguriert ist, die durch das Pumpsystem (9, 10) gepumpte kryogene Flüssigkeit aus dem internen Tank (2) heraus zu transportieren, beinhaltet, **dadurch gekennzeichnet, dass** das Pumpsystem zwei Kolbenpumpen (9, 10) beinhaltet, die durch einen Aktuator (19), vorzugsweise einen Linearaktuator, betätigt werden, wobei die zwei Kolbenpumpen parallel an den Druckkreislauf (7) angeschlossen sind und dazu konfiguriert sind, versetzt betätigt zu werden, um einen kontinuierlichen Strom an gepumpter kryogener Flüssigkeit in dem Druckkreislauf (7) sicherzustellen, das heißt, dass die zwei alternierenden Pumpen (9, 10) parallel eingesetzt werden und eine einzige Verdichtungsstufe bilden, die einen kontinuierlichen Strom mit konstantem Druck bereitstellt.

2. Vorrichtung nach Anspruch 1, **dadurch gekennzeichnet, dass** der Satz Deckel (11, 12, 13) einen ersten Deckel (12) und einen zweiten Deckel (13) beinhaltet, wobei der zweite Deckel (13) eine Öffnung in dem ersten Deckel (12) abdichtet, wobei der zweite Deckel (13) eine Stütze für das Pumpsystem (9, 10) bildet und dicht und demontierbar auf dem zweiten Deckel (13) montiert ist, wobei das Pumpsystem dazu konfiguriert ist, mit der Montage oder Demontage des zweiten Deckels (13) in Bezug auf den Behälter vertikal montiert oder demontiert zu werden.

3. Vorrichtung nach einem der Ansprüche 1 bis 2, **dadurch gekennzeichnet, dass** der Druckkreislauf (7) eine Druckleitung beinhaltet, die ein unteres Ende, das mit dem unteren Ende des Pumpsystems (9, 10) verbunden ist, und ein oberes Ende, das an den Satz Deckel (12, 13) angeschlossen ist, aufweist, wobei in der Verwendungskonfiguration der Vorrichtung (1) ein Teil der Druckleitung in die zu pumpende kryogene Flüssigkeit eingetaucht ist.

4. Vorrichtung nach den Ansprüchen 2 und 3 in Kombination, **dadurch gekennzeichnet, dass** das obere Ende der Druckleitung (7) an den zweiten Deckel (13) angeschlossen ist und an diesem mündet.

5. Vorrichtung nach einem der Ansprüche 1 bis 4, **dadurch gekennzeichnet, dass** der Kreislauf (4) zum Zuführen kryogener Flüssigkeit einen Satz eines oder mehrerer Ventile beinhaltet und in dem dichten Volumen verläuft, das durch den externen Tank (3) um den internen Tank (2) herum begrenzt wird.

6. Vorrichtung nach einem der Ansprüche 1 bis 5, **dadurch gekennzeichnet, dass** der Satz Deckel (11, 12, 13) mindestens einen Ausgangsdurchgang (6) zur Entgasung beinhaltet, der mit einem Satz einer oder mehrerer Entgasungsleitungen (8, 120, 140, 15) verbunden ist, die in dem dichten Volumen verlaufen, das durch den externen Tank (3) um den internen Tank (2) herum begrenzt wird.

7. Vorrichtung nach Anspruch 6, **dadurch gekennzeichnet, dass** der Satz einer oder mehrerer Entgasungsleitungen (8, 120, 140, 15) eine erste Entgasungsleitung (8) beinhaltet, die ein erstes Ende, das mit einem oberen Ende des internen Tanks (2) verbunden ist, und ein zweites Ende, das an einem Anschluss (17) außerhalb des Behälters mündet, aufweist.

8. Vorrichtung nach Anspruch 6, **dadurch gekennzeichnet, dass** die erste Entgasungsleitung (8) ein Ventil (14) beinhaltet.

9. Vorrichtung nach Anspruch 6 oder 7, **dadurch gekennzeichnet, dass** der Satz einer oder mehrerer Entgasungsleitungen (8, 120, 140, 15) mindestens eine zweite Entgasungsleitung (120, 140) beinhaltet, die ein erstes Ende, das mit der ersten Entgasungsleitung (8) verbunden ist, und ein zweites Ende, das an einem Anschluss oder Durchgang außerhalb des Behälters mündet, aufweist.

10. Vorrichtung nach Anspruch 9, **dadurch gekennzeichnet, dass** sie mindestens eine zweite Entgasungsleitung (15) umfasst, die über ein Ventil (18) verfügt und/oder an ein druckempfindliches Sicherheitsventil (16) angeschlossen ist, das sich außerhalb des Behälters befindet.

11. Vorrichtung nach einem der Ansprüche 1 bis 10, **dadurch gekennzeichnet, dass** das Pumpsystem (9, 10) eine Kolbenstange beinhaltet, die sich vertikal in dem internen Tank (2) erstreckt, wobei die Vorrichtung (1) eine Struktur (21) zum Stützen und Führen des Pumpsystems (9, 10) beinhaltet, die innerhalb des internen Tanks (2) um die Kolbenstange herum montiert ist, wobei die Vorrichtung (1) ferner eine Struktur (22, 23) zur thermischen Isolierung beinhaltet, die um die Struktur (21) zum Stützen und Führen herum eingefügt ist.

12. Vorrichtung nach Anspruch 11 in Kombination mit Anspruch 3 oder 5, **dadurch gekennzeichnet, dass** die Struktur (22, 23) zur thermischen Isolierung zwischen dem zweiten Deckel (13) und einem unteren Ende der Struktur (21) zum Stützen und Führen fest an dem zweiten Deckel (13) montiert ist.

13. Vorrichtung nach Anspruch 11 oder 12, **dadurch gekennzeichnet, dass** die Struktur (22, 23) zur thermischen Isolierung einen vertikalen Stapel eines Satzes einer oder mehrerer Schichten aus Isolierschaum und/oder eines Satzes eines oder mehrerer Thermoschilde beinhaltet.

14. Vorrichtung nach einem der Ansprüche 1 bis 13, **dadurch gekennzeichnet, dass** sie einen Abführkreislauf (24) beinhaltet, der mindestens eine Leitung beinhaltet, die ein erstes Ende, das an einem Anschluss oder Durchgang außerhalb des Behälters mündet, und ein zweites Ende, das an den Zuführkreislauf (4) angeschlossen ist, aufweist.

15. Anlage zum Füllen von Tanks mit kryogenem Druckfluid, insbesondere Flüssigwasserstoff, die mindestens eine Vorrichtung (1) zur Bereitstellung von Fluid nach einem der Ansprüche 1 bis 14 beinhaltet, wobei der Kreislauf (4) zum Zuführen kryogener Flüssigkeit dazu konfiguriert ist, an mindestens eine Quelle (25) verflüssigten kryogenen Fluids angeschlossen zu sein, wobei die Anlage (100) mindestens einen Verteiler (26) für kryogenes Druckfluid beinhaltet, der über eine Transportleitung (27) verfügt, die ein Ende aufweist, das dazu konfiguriert ist, an einen zu füllenden Tank (28) angeschlossen zu werden, wobei die Anlage (100) einen Verteilungskreislauf (29) beinhaltet, der den Druckkreislauf (7) mindestens einer Vorrichtung (1) zur Bereitstellung von Fluid mit mindestens einem Fluidverteiler (26) verbindet.

16. Anlage nach Anspruch 15, **dadurch gekennzeichnet, dass** sie mehrere Vorrichtungen (1) zur Bereitstellung von Fluid beinhaltet, die über den Verteilungskreislauf (29) parallel an einen oder mehrere Fluidverteiler (26) angeschlossen sind, wobei der Verteilungskreislauf (29) eine gemeinsame Verteilungsleitung und einen Satz eines oder mehrerer Verteilungsventile (30, 31), der dazu konfiguriert ist, den Transport von Fluid selektiv von einer oder mehreren Vorrichtungen (1) zur Bereitstellung von Fluid zu dem oder den Fluidverteilern (26) zu gestatten, beinhaltet.

17. Anlage nach einem der Ansprüche 15 oder 16, **dadurch gekennzeichnet, dass** sie mindestens eine Quelle (25) kryogener Flüssigkeit beinhaltet, die an den Kreislauf (4) zum Zuführen kryogener Flüssigkeit der mindestens einen Vorrichtung (1) zur Bereitstellung von Fluid angeschlossen ist.

18. Anlage nach einem der Ansprüche 15 bis 17, die mindestens eine Vorrichtung (1) zur Bereitstellung von Fluid nach Anspruch 7 oder 8 beinhaltet, **dadurch gekennzeichnet, dass** sie einen Gasabzugsschacht (32) beinhaltet, der an den Satz einer oder mehrerer Entgasungsleitungen (8, 120, 140, 15) der Vorrichtung (1) zur Bereitstellung von Fluid angeschlossen ist.

19. Anlage nach den Ansprüchen 17 und 18, **dadurch gekennzeichnet, dass** der Fluidverteiler (26) einen Kreislauf (33) zur Rückgewinnung von Druckgas beinhaltet, der an die Transportleitung (27) und ein Organ zur Rückgewinnung von Gas, beispielsweise die Quelle (25) kryogener Flüssigkeit, angeschlossen ist.

20. Anlage nach den Ansprüchen 18 und 19, **dadurch gekennzeichnet, dass** der Fluidverteiler (26) einen Kreislauf (33, 34) zur Rückgewinnung von Gas beinhaltet, der ein Ende, das an die Transportleitung (27) angeschlossen ist, und ein Ende, das an ein Organ zur Rückgewinnung von Gas, beispielsweise die Quelle (25) kryogener Flüssigkeit, angeschlossen ist und/oder an den Schacht (32) angeschlossen ist, aufweist.

21. Anlage nach einem der Ansprüche 15 bis 20, **dadurch gekennzeichnet, dass** sie einen Vorrat (35) an Spülgas, beispielsweise Stickstoff, und ein Abführungsnetz (36), das den Vorrat (35) an Spülgas mit der Transportleitung (27) des Fluidverteilers (26) und mit der/den Vorrichtung(en) (1) zur Bereitstellung verbindet, beinhaltet.

## Claims

1. Device for supplying pressurized cryogenic fluid comprising a thermally insulated container consisting of an inner tank (2) delimiting a volume designed to store cryogenic liquid to be pumped, for example liquid hydrogen, and an outer tank (3) arranged about the inner tank (2) and delimiting a sealed volume about the inner tank (2), when the device (1) is in the usage state, the inner tank (2) and the outer tank (3) extending vertically and being closed at the top end thereof by a set of covers (11, 12, 13), the device (1) comprising a pumping system (9, 10) mounted on the set of covers (11, 12, 13) and comprising a lower end seated in the volume delimited by the inner tank (2) and designed to pump the cryogenic liquid therein, the device (1) further comprising a cryogenic liquid feed circuit (4) designed to supply the inner tank (2) with cryogenic fluid and a delivery circuit (7) designed to transfer the cryogenic liquid pumped by the pumping system (9, 10) out of the inner tank (2), **characterized in that** the pumping system comprises two piston pumps (9, 10) actuated by an actuator (19), preferably a linear actuator, the two piston pumps being connected in parallel to the delivery circuit (7) and designed to be actuated in an offset manner to ensure a continuous flow of cryogenic liquid pumped through the delivery circuit (7), i.e. the two reciprocating pumps (9, 10) are used in parallel and form a single compression stage delivering a constant continuous pressurized flow.

2. Device according to Claim 1, **characterized in that** the set of covers (11, 12, 13) comprises a first cover (12) and a second cover (13), the second cover (13) closing an opening in the first cover (12), the second cover (13) forming a support for the pumping system (9, 10) and being mounted sealingly and removably on the second cover (13), the pumping system being designed to be mounted or removed vertically in
relation to the container when the second cover (13) is mounted or removed.

3. Device according to either of Claims 1 and 2, **characterized in that** the delivery circuit (7) comprises a delivery line having a lower end connected to the lower end of the pumping system (9, 10) and an upper end connected to the set of covers (12, 13), when the device (1) is in the usage state, a part of the delivery line being immersed in the cryogenic liquid to be pumped.

4. Device according to Claims 2 and 3 taken in combination, **characterized in that** the upper end of the delivery line (7) is connected to the second cover (13) and opens in the latter.

5. Device according to any one of Claims 1 to 4, **characterized in that** the cryogenic liquid feed circuit (4) comprises a set of valves and passes through the sealed volume delimited about the inner tank (2) by the outer tank (3).

6. Device according to any one of Claims 1 to 5, **characterized in that** the set of covers (11, 12, 13) comprises at least one degassing outlet passage (6) connected to a set of degassing lines (8, 120, 140, 15) passing through the sealed volume delimited about the inner tank (2) by the outer tank (3).

7. Device according to Claim 6, **characterized in that** the set of degassing lines (8, 120, 140, 15) comprises a first degassing line (8) having a first end connected to an upper end of the inner tank (2) and a second end leading to a coupling (17) outside the container.

8. Device according to Claim 6, **characterized in that** the first degassing line (8) comprises a valve (14).

9. Device according to Claim 6 or 7, **characterized in that** the set of degassing lines (8, 120, 140, 15) comprises at least one second degassing line (120, 140) having a first end connected to the first degassing line (8) and a second end leading to a coupling or passage outside the container.

10. Device according to Claim 9, **characterized in that** it includes at least one second degassing line (15) provided with a valve (18) and/or connected to a pressure-sensitive safety valve (16) located outside the container.

11. Device according to any one of Claims 1 to 10, **characterized in that** the pumping system (9, 10) comprises a piston rod that extends vertically in the inner tank (2), the device (1) comprising a support and guidance structure (21) for the pumping system (9, 10) mounted about the piston rod inside the inner tank (2), the device (1) further comprising a thermal insulation structure (22, 23) interposed about the support and guidance structure (21).

12. Device according to Claim 11 combined with Claim 3 or 5, **characterized in that** the thermal insulation structure (22, 23) is rigidly connected to the second cover (13) between the second cover (13) and a lower end of the support and guidance structure (21).

13. Device according to Claim 11 or 12, **characterized in that** the thermal insulation structure (22, 23) comprises a vertical stack of a set of insulating foam layers and/or a set of thermal shields.

14. Device according to any one of Claims 1 to 13, **characterized in that** it comprises a purge circuit (24) comprising at least one line having a first end leading to a coupling or passage outside the container and a second end connected to the feed circuit (4).

15. Installation for filling tanks with pressurized cryogenic fluid, in particular liquefied hydrogen, comprising at least one fluid supply device (1) according to any one of Claims 1 to 14, wherein the cryogenic liquid feed circuit (4) is designed to be connected to at least one source (25) of liquefied cryogenic fluid, the installation (100) comprising at least one pressurized cryogenic fluid distributor (26) provided with a transfer line (27) having one end designed to be connected to a tank (28) to be filled, the installation (100) comprising a distribution circuit (29) connecting the delivery circuit (7) of at least one fluid supply device (1) to at least one fluid distributor (26).

16. Installation according to Claim 15, **characterized in that** it comprises several fluid supply devices (1) connected in parallel to one or more fluid distributors (26) via the distribution circuit (29), the distribution circuit (29) comprising a common distribution line and a set of distribution valves (30, 31) designed to enable the selective transfer of fluid from one or more fluid supply devices (1) to the fluid distributor or distributors (26).

17. Installation according to either of Claims 15 and 16, **characterized in that** it comprises at least one source (25) of cryogenic liquid connected to the cryogenic liquid feed circuit (4) of the at least one fluid supply device (1).

18. Installation according to any one of Claims 15 to 17, comprising at least one fluid supply device (1) according to Claim 7 or 8, **characterized in that** it comprises a gas discharge flue (32) connected to the set of degassing lines (8, 120, 140, 15) of the fluid supply device (1).

19. Installation according to Claims 17 and 18, **characterized in that** the fluid distributor (26) comprises a pressurized gas recovery circuit (33) connected to the transfer line (27) and a gas recovery member, for example the source (25) of cryogenic liquid.

20. Installation according to Claims 18 and 19, **characterized in that** the fluid distributor (26) comprises a gas recovery circuit (33, 34) having one end connected to the transfer line (27) and one end connected to a gas recovery member, for example the source (25) of cryogenic liquid and/or connected to the flue (32).

21. Installation according to any one of Claims 15 to 20, **characterized in that** it comprises a reserve (35) of flushing gas, for example nitrogen, and a purge network (36) connecting the reserve (35) of flushing gas to the transfer line (27) of the fluid distributor (26) and to the supply device or devices (1).
